# EUROPÄISCHE PATENTSCHRIFT

(11) **EP 1 943 508 B1**
(45) Veröffentlichungstag und Bekanntmachung des Hinweises auf die Patenterteilung: **27.07.2011**
(21) Anmeldenummer: 06754475.9
(22) Anmeldetag: 21.06.2006
(51) Int. Cl.: G01N 29/04, G01N 29/06, G01N 29/26

(54) **VERFAHREN ZUR ZERSTÖRUNGSFREIEN UNTERSUCHUNG EINES PRÜFKÖRPERS MITTELS ULTRASCHALL**
METHOD FOR THE NON-DESTRUCTIVE INSPECTION OF A TEST BODY USING ULTRASOUND
PROCEDE POUR EXAMINER UN CORPS D'ESSAI DE MANIERE NON DESTRUCTRICE AU MOYEN D'ULTRASONS

(30) Priorität: 28.10.2005 DE 102005051781
(43) Veröffentlichungstag der Anmeldung: 16.07.2008
(73) Patentinhaber: Fraunhofer-Gesellschaft zur Förderung der angewandten Forschung e.V., 80686 München (DE)
(72) Erfinder: KRÖNING, Michael, 66123 Saarbrücken (DE); BOULAVINOV, Andrei, 66123 Saarbrücken (DE); REDDY, Krishna, Mohan c/o Andrey Bulavinov, 66123 Saarbrücken (DE); VON BERNUS, Ludwig, 91575 Windsbach (DE)
(74) Vertreter: Rösler, Uwe
(86) Internationale Anmeldenummer: PCT/EP2006/005931
(87) Internationale Veröffentlichungsnummer: WO 2007/048454

(56) Entgegenhaltungen:
- EP-A- 1 300 690
- US-A- 5 005 418
- US-A- 5 465 722
- US-B1- 6 685 645

## Beschreibung

### Technisches Gebiet

Die Erfindung bezieht sich auf ein Verfahren zur zerstörungsfreien Untersuchung eines Prüfkörpers mittels Ultraschall, bei dem mit einem oder einer Vielzahl von Ultraschallwandlem Ultraschallwellen in den Prüfkörper eingekoppelt und innerhalb des Prüfkörpers reflektierte Ultraschallwellen von einer Vielzahl von Ultraschallwandlem empfangen und in Ultraschallsignale umgewandelt werden, die der zerstörungsfreien Untersuchung zugrunde gelegt werden.

### Stand der Technik

Die Vorgehensweise bei der zerstörungsfreien Untersuchung eines Prüfkörpers mittels Ultraschall, bspw. zu Zwecken der Materialprüfung hinsichtlich Materialfehler, wie Risse, Einschlüsse oder sonstiger Materialinhomogenitäten, umfasst die Einkoppelung von Ultraschallwellen in den Prüfkörper, die Detektion der durch den Prüfkörper transmittierten oder innerhalb des Prüfkörpers reflektierten, gebeugten, gestreuten und/oder gebrochenen Ultraschallwellen sowie der Auswertung der in Ultraschallsignale umgewandelten Ultraschallwellen.

Mit der vorstehenden, an sich bekannten Untersuchungsmethode ist es möglich die Durchschallungs-, bzw. die Reflexionseigenschaften für Ultraschallwellen eines Prüfkörpers zu erfassen und auszuwerten. So bilden sich bei diesem, ursprünglich aus der Medizintechnik (Ultraschalldiagnostik) stammenden Verfahren innerhalb eines Prüfkörpers befindliche Störstellen, wie Materialrisse, materialfremde Einlagerungen oder Materialgrenzen, durch entsprechende Auswertung der empfangenen Ultraschallsignale als Bereiche mit geänderten Reflexionseigenschaften ab. Lage, Form und Größe der Störstellen können in räumlich hoch aufgelöster Weise dreidimensional zur Darstellung gebracht werden.

Es liegt auf der Hand, dass die Anwendungsgebiete dieses Verfahren vielfältig sind. Beispielhaft seien die Anwendung des Verfahrens zur Prüfung und Erfassung von Homogenitäts- oder Festigkeitseigenschaften von Bauwerksteilen (Betonwände, Decken- oder Wandelemente, etc.) oder zur Rissprüfung bspw. bei Eisenbahnrädern oder Flugzeugteilen genannt.

In vielen Anwendungsfällen der zerstörungsfreien Materialprüfung mittels Ultraschall kommt eine Vielzahl von Ultraschallwandlem zum Einsatz, die für eine bessere Handhabung in einem so genannten Ultraschallprüfkopf oder GruppenstrahlerPrüfkopf zusammengefasst werden. Grundsätzlich werden zwei Arten von Ultraschallprüfköpfen unterschieden. Von einem Impuls-Echo-Prüfkopf spricht man, wenn der Prüfkopf ein Ultraschallwellenpaket in den Prüfkörper einkoppelt und die im Prüfkörper reflektierten Ultraschallwellen wieder empfängt. Prüfköpfe mit getrennten Ultraschallwandlem zum Einkoppeln und Empfangen von Ultraschallwellen werden hingegen als Sende-Empfangs-Prüfköpfe bezeichnet.

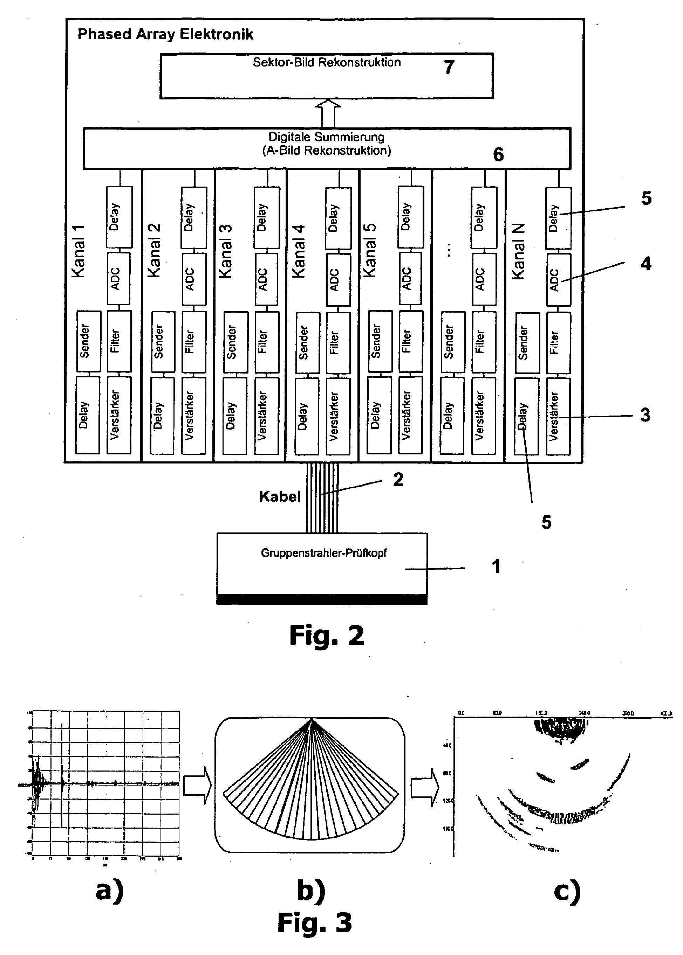

In allen bisher bekannten Ultraschallprüfköpfen sind die einzelnen Ultraschallwandler jeweils mit einem Steuergerät verbunden, das für jeden Ultraschallwandler eine separate Steuerungselektronik, d.h. einen eigenen elektrischen Steuerungskanal, aufweist, so dass einzelnen Ultraschallwandler unabhängig voneinander angesteuert werden können und bspw. als Ultraschallsender oder -empfänger dienen. Insbesondere ermöglicht eine derartige separate Ansteuerung die einzelnen Ultraschallwandler jeweils mit unterschiedlichen Phasenlage und Amplitude zu betreiben. In Figur 2 ist ein bekannter Aufbau eines Gruppenstrahlersystems schematisiert dargestellt, das unter Nutzung der Phased Array Technik Ultraschallwellen im Prüfkörper unter beliebigen Winkeln und in beliebigen Fokussierbereichen anzuregen und aus diesen zu empfangen in der Lage ist. Das Gruppenstrahlersystem besteht aus dem Prüfkopf 1 mit einer Vielzahl einzelner Ultraschallwandler, die allesamt mit einer Mehrkanal-Elektronik über Kabel 2 zur Übertragung elektrischer Signale verbunden sind. Pro Kanal weist die Ultraschallelektronik zur Ansteuerung eines Ultraschallwandlers einen Verstärker 3, einen Analog-Digital Wandler 4, Sende- und Empfangverzögerungsglieder 5, einen Signal-Addierer 6 und eine Sektor-Bild Rekonstruktionseinheit 7 auf.

Zur Durchführung einer Messung, mit der das Durchschallungsvermögen eines Prüfkörpers untersucht werden soll, regt das Steuergerät zumindest einen, meist jedoch mehrere Ultraschallwandler des Gruppenstrahlerprüfkopfes für ein begrenztes, kurzes Zeitintervall zur Einkoppelung von Ultraschallwellen in den Prüfkörper an. Die dabei entstehenden, eingekoppelten Ultraschallwellenpakete werden bspw. an Störstellen innerhalb des Prüfkörper reflektiert und gelangen als reflektierte Ultraschallwellen zu den nunmehr als Empfänger arbeitenden Ultraschallwandlem zurück, werden von diesen in Ultraschallsignale umgewandelt und an das Steuergerät zur Auswertung geleitet. Die Zeitspanne zwischen dem Aussenden und Empfangen der Ultraschallsignale wird zumeist als Messtakt bezeichnet. Nicht zuletzt aus Gründen einer verbesserten Signalermittlung und -auswertung wird eine Vielzahl derartiger Messtakte zeitlich hintereinander ausgeführt, um ein annehmbares Signal-/Rauschverhältnis zu erhalten.

In vielen Anwendungsfällen gilt es die Durchschallungs- und Reflexionseigenschaften eines Prüfkörpers räumlich möglichst fein aufgelöst innerhalb des Prüfkörpervolumens zu ermitteln. Hierzu werden zur Vorgabe der Einschallrichtung sowie Fokustiefe die Zeitverzögerungen für die Sendetakte entsprechend eingestellt werden. Die empfangenen Ultraschallsignale der einzelnen Ultraschallwandler des Gruppenstrahlerprüfkopfes werden gleichsam mit Phasenverzögerung aufaddiert, so dass in einem Sendetakt ein Ultraschallsignal für einen bestimmten Einschallwinkel und ggf. einer bestimmten Fokustiefe entsteht, man spricht in diesem Fall von einem so genannten A-Bild, das in Figur 3a dargestellt ist. Das A-Bild repräsentiert das Ultraschallecho längs einer vorgegebenen "Blick- bzw. Schallausbreitungsrichtung" durch den Prüfkörper. Es kann als 1-dimensionales Schnittbild, in Art einer Schnittlinie durch den Prüfkörper angesehen werden, längs der Ultraschallechosignale räumlich aufgelöst angegeben sind. Wird der Prüfkörper unter verschiedenen Winkeln durchschallt, d.h. schwenkt man das Schallbündel im Prüfkörper, vorzugsweise innerhalb einer einheitlichen Schwenkebene, ist es möglich ein so genanntes Sektor-Bild zu rekonstruieren, das sich aus einer Vielzahl einzelner A-Bilder zusammensetzt, wie es aus der Graphik gemäß Figur 3b zu entnehmen ist. Werden zudem die einzelnen Echosignale längs der Vielzahl zusammengestellter A-Bilder mit verschiedenen Farben kodiert, so ergibt sich ein interpretationsfähiges Sektor-Bild oder B-Bild gemäß Bilddarstellung in Figur 3c, anhand dem Orte erhöhter Reflektivität innerhalb des Prüfkörpers innerhalb einer Schnittebene oder eines Sektor entnehmbar sind.

Nachteilhaft bei der Anwendung des Phased-Array-Verfahrens zur zerstörungsfreien Materialuntersuchung an einem Prüfkörper ist jedoch der zeitliche und messtechnische Aufwand bis ein Prüfkörper möglichst vollständig untersucht ist, gilt es doch möglichst aus allen Volumenbereichen für eine vollständige Signalauswertung hinreichend zuverlässige Messsignale zu erhalten. So lässt sich in einem Messtakt oder einer Vielzahl einzelner Messtakte mit gleicher Phasenansteuerung der Ultraschallwandler lediglich eine Information über die Reflexionseigenschaften in nur einem Volumenbereich oder längs eines vorgegebenen Sektors des Prüfkörpers erhalten. Für eine Untersuchung des gesamten Prüfkörpervolumens ist daher eine sehr große Anzahl von Messungen mit jeweils unterschiedlichen Phasenansteuerungen erforderlich, was zu einem hohen Zeitaufwand für die gesamte Materialprüfung führt. So bedarf es einer arbeits- und zeitaufwendigen Umprogrammierung zum Einstellen eines neuen Einschallwinkels bzw. einer neuen Fokuslage.

Ein weiterer Nachteil ist darin zu sehen, dass ein vorgegebener Einschallwinkel die Prüfkopfapertur festlegt, d.h. die Apertur kann nicht für alle Einschallwinkel optimal gewählt werden, was die Auflösung der Messungen verschlechtert.

Nachteilig bei dem Phased-Array-Verfahren ist zudem, dass für jeden Ultraschallwandler ein eigener Sende- und Empfangskanal mit entsprechender Ansteuerelektronik vorzusehen ist, die über separate elektrische Verbindungen mit dem jeweiligen Ultraschallwandler zu verbinden ist. Da die heute verwendeten Ultraschallprüfköpfe meist 16 oder mehr Ultraschallwandler umfassen, erfordert die Verbindung zwischen Prüfkopf und dem Steuergerät einen zumeist dicken und unflexiblen, und daher schlecht handhabbaren Kabelstrang.

Zur Entschärfung der vorstehenden Problematik ist in der DE 10 2004 059 856.8-52 das Prinzip eines getakteten Gruppenstrahlersystems erläutert, bei dem alle Ultraschallwandler des Gruppenstrahlerprüfkopfes zeitlich nacheinander angeregt werden, wobei in jedem Sendetakt alle Ultraschallwandler aus dem Prüfkörper zurückkommende Ultraschallechosignale empfangen. Die aufgenommenen Zeitsignale werden gespeichert und erst nach Beendigung der Prüfkörperdurchschallung werden die gespeicherten Zeitsignale unter Zugrundelegung eines Rekonstruktionsalgorithmuses ausgewertet. Auf diese Weise ist man in der Lage, aus den gespeicherten Zeitsignalen Ultraschallsignale für eine oder mehrere beliebige Einschallrichtungen bzw. Fokustiefen zu rekonstruieren.

### Darstellung der Erfindung

Der Erfindung liegt die Aufgabe zugrunde eine weitere Verbesserung selbst hinsichtlich des in der vorstehend zitierten DE 10 2004 059 856.8-52 beschriebenen Gruppenstrahlersystems hinsichtlich des technischen und zeitlichen Aufwandes für die Durchführung einer zerstörungsfreien Untersuchung eines Prüfkörpers zu ermöglichen. Insbesondere soll der Zeitaufwand, mit dem derartige Prüfkörper untersucht werden nochmals entscheidend reduziert werden.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der weiteren Beschreibung unter Bezugnahme auf die Ausführungsbeispiele zu entnehmen.

Das lösungsgemäße Verfahren nutzt spezielle physikalische Wellenausbreitungsphänomene in Kombination mit einer speziellen Rekonstruktionstechnik die es gestattet, einzelne zeit- und ortsaufgelöste Ultraschallechosignale längs eines vorgebbaren Einschallwinkels, sog. A-Bilder, sowie auch Sektorbilder in Form zweidimensionaler Ultraschallschnittbilder, als auch dreidimensionale Volumenbilder ohne mehrfaches Senden und Empfangen, d. h. lediglich innerhalb eines einzigen Sendetaktes, rekonstruktiv zu erhalten.

Lösungsgemäß zeichnet sich ein Verfahren zur zerstörungsfreien Untersuchung eines Prüfkörpers mittels Ultraschall gemäß den Merkmalen des Oberbegriffes des Anspruches 1 dadurch aus, dass in einem ersten Verfahrensschritt eine. Vielzahl von Ultraschallwandler an einer Oberfläche des Prüfkörpers derart vorgesehen und aktiviert sind, dass sich die in den Prüfkörper eingekoppelten Ultraschallwellen innerhalb des Prüfkörpers räumlich weitgehend gleich verteilt ausbreiten. In einem nächsten Schritt werden die innerhalb des Prüfkörpers reflektierten Ultraschallwellen mit einer Vielzahl m von an der Oberfläche des Prüfkörpers vorgesehenen Ultraschallwandlern empfangen, die jeweils Ultraschallzeitsignale generieren, in denen zeitaufgelöst Amplitudeninformationen enthalten sind. Alle von den m Ultraschallwandlern aufgenommenen Ultraschallzeitsignale werden in einer geeigneten Speichereinheit für eine nachfolgende Bearbeitung und Auswertung abgespeichert. Unter Zugrundelegung der m Ultraschallzeitsignale erfolgt letztlich im Wege eines rekonstruktiven Auswertevorganges unter Zugrundelegung eines entsprechenden Rekonstruktionsalgorithmuses die Ermittlung eines dreidimensionalen Volumenbildes, eines Sektorbildes in Form eines zweidimensionalen Ultraschallschnittbildes durch den Prüfkörper oder eines A-Bildes in Form eines eindimensionalen, längs eines vorgebbaren Einschallwinkels.

Zur Durchführung des lösungsgemäßen Verfahrens eignet sich ein an sich bekannter Gruppenstrahlprüfkopf mit einer Vielzahl arrayförmig, d.h. linear oder matrixweise, angeordneter Ultraschallwandler, die allesamt über möglichst kleine Abmessungen längs zur Prüfkörperoberfläche besitzen und aufgrund dessen oder darüber hinaus über eine sehr breite Richtcharakteristik verfügen, d. h. jeder einzelne Ultraschallwandler vermag grundsätzlich Ultraschallwellen in alle erreichbaren Raumrichtungen innerhalb des Prüfkörperbereich einzuschallen, an dessen Oberfläche der Ultraschallwandler zu Zwecken einer akustischen Ankopplung positioniert ist.

Lösungsgemäß ist eine Vielzahl n von arrayförmig verteilt angeordneten Ultraschallwandlem an einer Oberfläche des Prüfkörpers vorzusehen, von denen wenigsten eine Gruppe von i der n Ultraschallwandler derart aktiviert wird, dass sich die i in den Prüfkörper eingekoppelten Ultraschallwellenfronten zu einer sich innerhalb des Prüfkörpers räumlich weitgehend gleich verteilt ausbreitenden Gesamtwellenfront überlagern. Für den Zählparameter i gilt: 3 ≤ i ≤ n. Zur Ausbildung einer sich räumlich weitgehend gleich verteilt ausbreitenden Gesamtwellenfront gilt es die einzelnen i Ultraschallwandler zeitverzögert mit entsprechenden elektrischen Sendeimpulsen zu aktivieren, so dass die innerhalb des Prüfkörpers entstehende Wellenfront möglichst zylinder- oder kugelförmig ausgebildet ist, wodurch gewährleistet ist, dass die Schallausbreitung gleichfalls der vorstehend beschriebenen Lösungsalternative in alle Einschallrichtungen während eines Sendetaktes weitgehend gleichmäßig erfolgt.

Gleichsam der vorstehend beschriebenen Lösungsalternative werden auch unter Nutzung der Schallaussendung über eine Vielzahl i einzelner Ultraschallwandler innerhalb des Prüfkörpers rückreflektierte Ultraschallwellenanteile von einer Vielzahl m an der Oberfläche vorgesehener Ultraschallwandler empfangen, wobei die Vielzahl m vorzugsweise die Gesamtheit aller innerhalb eines Gruppenstrahlprüfkopfes enthaltener Ultraschallwandler entspricht und vorzugsweise m = n ist. Von den n vorgesehenen Ultraschallwandlem werden entsprechend viele m Ultraschallzeitsignale generiert, in denen zeitaufgelöst Amplitudeninformationen enthalten sind, die in entsprechender Weise zur weiteren rekonstruktiven Auswertung abgespeichert werden.

Im Unterschied zu den bisher angewandten Rekonstruktionstechniken, bei denen ausgehend von der Erstellung einer Vielzahl einzelner A-Bilder, die jeweils . Ultraschallechosignale längs eines definierten Einschall- bzw. "Betrachtungs-Winkels" repräsentieren, eine Konstruktion zweidimensionaler Sektor- bzw. B-Bilder durchgeführt wird, basiert die neuartige Rekonstruktionstechnik auf der Berücksichtigung der Ultraschalllaufzeiten ausgehend vom Sendeereignis zu jedem einzelnen Raumpunkt innerhalb des Prüfkörpers und zurück zum Ort jeweils eines die reflektierten Ultraschallwellenanteile empfangenden Ultraschallwandlers. Auf diese Weise ist man in der Lage, ein Volumen- oder Sektorbild zu rekonstruieren, ohne dabei einzelne A-Bilder zu berechnen. Vielmehr wird auf der Grundlage der empfangenen Ultraschallzeitsignale das Volumen des Prüfkörpers in einzelne Raumpunkte, in sog. Voxel, unterteilt, denen jeweils wenigstens ein Teil des aus dem jeweiligen Raumpunkt herrührenden Ultraschallechosignals zugeordnet wird, das einem sog. Voxelwert entspricht. Je nach Vorgabe bestimmter Auswerteschwerpunkte werden zur Erstellung, bspw. eines B-Bildes bzw. eines Sektorbildes aus der Gesamtheit aller abgespeicherter Voxelwerte jene ausgewählt, die in der vorgegebenen Schnittebene enthalten sind. Somit setzt sich ein zweidimensionales Sektor-Bild pixelartig aus einer Vielzahl einzelner Voxelwerte zusammen und nicht wie bisher aus der Zusammenfügung einzelner berechneter A-Bilder.

Durch die Erfassung und Abspeicherung der Vielzahl von das gesamte zu untersuchende Prüfkörpervolumen repräsentierenden Voxelwerten können je nach Prüfaufgabenstellung beliebige Prüfkörperuntersuchungen im Wege einer zerstörungsfreien Ultraschallprüfung ohne großen Zeit- und Kostenaufwand durchgeführt werden. Weitere, die lösungsgemäßen Verfahrensvariante betreffende Aspekte können der weiteren Beschreibung unter Bezugnahme auf die Ausführungsbeispiele entnommen werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a - c: Sende- und Empfangssequenzen zur Durchführung einer Ultraschallprüfung an einem Prüfkörper,
- Fig. 2: schematisierter Aufbau eines an sich bekannten Gruppenstrahlersystems,
- Fig. 3a - c: Darstellung zur Rekonstruktion eines Sektorbildes bzw. B-Bildes,
- Fig. 4: Aufbau eines modifizierten Gruppenstrahlersystems,
- Fig. 5: Darstellung zur Rekonstruktion eines Sektor-Bildes bzw. D-Bildes sowie
- Fig. 6: Darstellung zur Rekonstruktion eines A-Bildes.

### Wege zur Ausführung der Erfindung, gewerbliche Verwendbarkeit

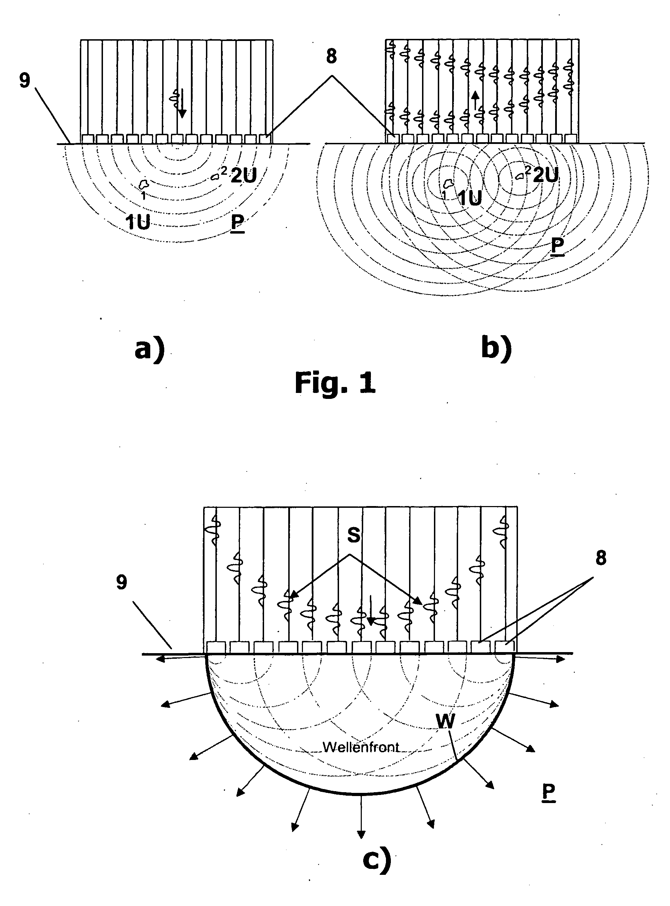

In Figur 1a ist ein Gruppenstrahlerprüfkopf stark schematisiert dargestellt, der eine Vielzahl n linear nebeneinander angeordneter Ultraschallwandler 8 vorsieht, die längs der Oberfläche 9 eines Prüfkörpers P angeordnet sind.

Die einzelnen Ultraschallwandler 8 zeichnen sich durch eine sehr kleine Abmessung lateral zur Oberfläche 9 des Prüfkörpers P aus und verfügen über eine sehr breite Richtcharakteristik. Würde man in diesem Fall alle einzelnen nebeneinander angeordneten Ultraschallwandler 8 des Gruppenstrahlerprüfkopfes gleichzeitig anregen, so würde sich innerhalb des Prüfkörpers P aufgrund des Apertur-Wellenlängen-Verhältnisses ein gerichtetes, in den Prüfkörper P vordringendes Schallfeld ausbilden.

Das Verfahrensprinzip nutzt hingegen das Vermögen eines Ultraschallwandlers 8, der vorzugsweise mittig innerhalb des Gruppenstrahlerprüfkopfes angeordnet ist, der aufgrund seiner breiten Richtcharakteristik bei entsprechender elektrischer Anregung alle Einschallrichtungen innerhalb des Prüfkörpers abzudecken vermag. Durch gezielte Anregung eines einzigen Ultraschallwandlers werden bei pulsartiger Anregung sich kugelförmig ausbildende Wellenfronten in das Innere des Prüfkörpers P abgestrahlt, wie es in der Darstellung gemäß Figur 1 a zu entnehmen ist. Es sei angenommen, dass innerhalb des Prüfkörpers P zwei Materialungänzen 1 U und 2U vorgesehen sind, an denen die Ultraschallwellen teilweise reflektiert werden. In Figur 1b ist die Empfangssituation dargestellt, in der die von den Materialungänzen 1 U und 2U austretenden sekundären Ultraschallwellen von der Vielzahl m an der Prüfkörperoberfläche 9 vorgesehenen Ultraschallwandlern 8 empfangen werden. Die von den Ultraschallwandlern 8 empfangenden rückreflektierten Ultraschallwellen entsprechen Echosignalen, in denen Amplituden- und Laufzeitinformationen bzgl. der innerhalb des Prüfkörpers P enthaltenen Materialungänzen 1 U und 2U enthalten sind, jedoch können die Orte der Materialungänzen zunächst nicht lokalisiert werden. Die durch die Ultraschallwandler 8 empfangenen Echosignale erfahren eine entsprechende Verstärkung, Filterung sowie Digitalisierung und werden letztlich in digitaler Form in einem Speicher abgespeichert.

Im Gegensatz zum Sendevorgang, der in Figur 1 a dargestellt und beschrieben ist, wird die Vielzahl der auf der Oberfläche 9 des Prüfkörpers P angeordneten Ultraschallwandler erfindunsgemäß in Figur 1c mit einer entsprechend eingestellten Sendeverzögerung mit elektrischen Sendeimpulsen S angeregt, so dass die im Prüfkörper P entstehende Wellenfront W eine kugelförmige Gestalt annimmt. Dies gewährleistet ebenfalls die Schallausbreitung in allen Einschallrichtungen innerhalb eines Sendetaktes. Der Empfangsvorgang entspricht auch in diesem Fall jener der unter Bezugnahme auf Figur 1b beschriebenen Situation, wobei auch im vorliegenden Fall die digitalisierten Ultraschallsignale bzw. Echosignale in einem Speicher unter Berücksichtigung der ihnen zuordenbaren Amplituden- und Laufzeitinformationen abgespeichert werden.

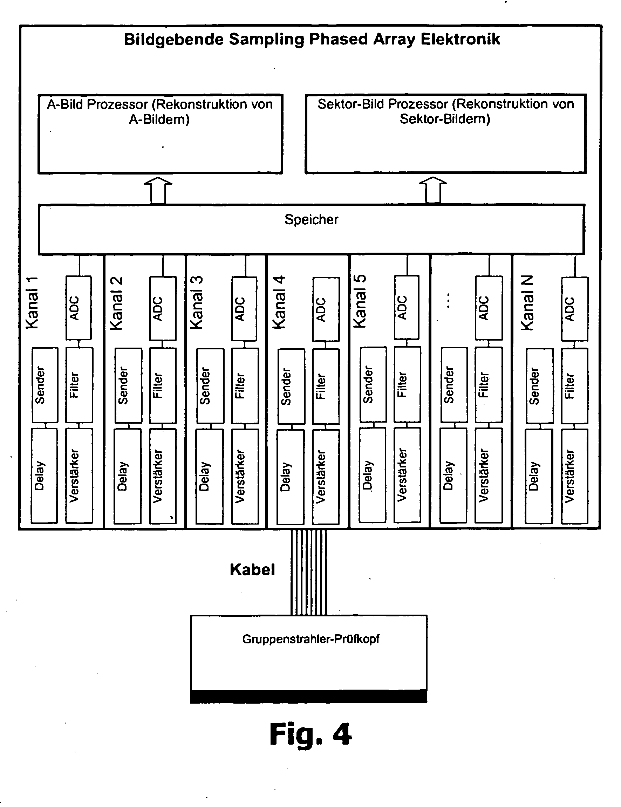

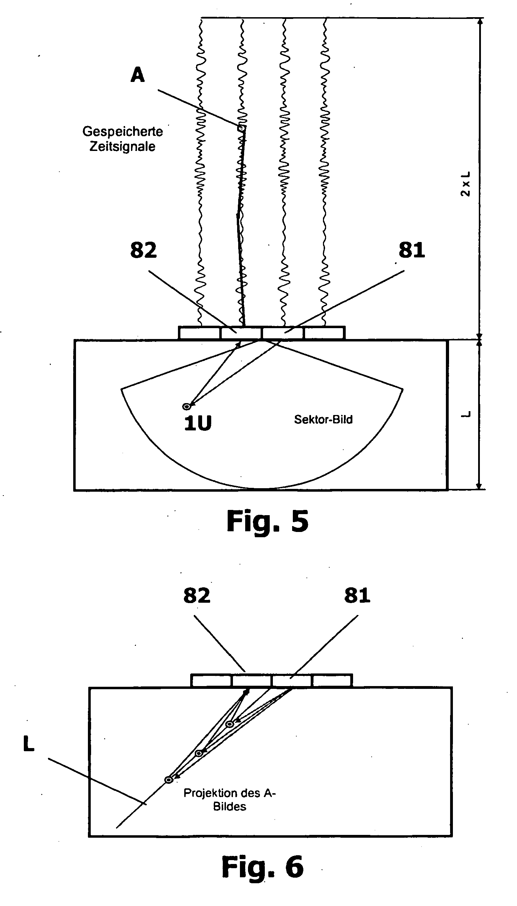

Zur Durchführung der vorstehend beschriebenen Sende- und Empfangsszenarien wird auf die Oberfläche 9 eines Prüfkörpers P ein modifizierter Gruppenstrahlprüfkopf aufgebracht, der schematisiert in Figur 4 dargestellt ist. Im Unterschied zu einem an sich bekannten, gemäß Figur 2 dargestellten Gruppenstrahlersystem bedarf es keines Zeitverzögerungsgliedes 5 innerhalb der Empfangslogik, vielmehr werden die verstärkten, gefilterten und digital gewandelten Echosignale in einem Speicher abgespeichert und dies unter Beibehalt der Amplituden- und Zeitinformationen. Die für die Darstellung von A- oder B-Bildern bzw. Sektorbildern erforderlichen Informationen werden mittels spezieller Rekonstruktionseinheiten unmittelbar aus den abgespeicherten Echosignalen berechnet. Die Hauptidee, die der Rekonstruktion zugrunde liegt, basiert auf der Berücksichtigung der Ultraschalllaufzeiten von jedem einzelnen Ultraschallsendeort zu jedem Raumpunkt innerhalb des Prüfkörpers sowie zurück zu jedem Ort, an dem ein Ultraschallempfänger vorgesehen ist. In anderen Worten, der gesamte Raumbereich des Prüfkörpers wird in kleinste einzelne Volumenbereiche, in sog. Voxels unterteil, wobei innerhalb eines Sendetaktes jedem einzelnen Voxel eine Ultraschallechoinformation zuordenbar ist, die als digitale Zeit- und Amplitudeninformation innerhalb einer Speichereinheit abgespeichert wird. Zur Rekonstruktion bspw. eines B-Bildes bzw. eines Sektorbildes gilt es aus der Gesamtheit aller abgespeicherten Voxelwerte jene auszuwählen, die in einer gewünschten zu untersuchenden Schnittebene durch den Prüfkörper liegen. Dieser Vorgang ist schematisiert in Figur 5 dargestellt. So sei bspw. angenommen, dass vom Ultraschallsender 81 eine Ultraschallwelle in das Innere des Prüfkörpers P ausgesandt, an der Materialungänze 1 U reflektiert und vom Ultraschallwandler 82 empfangen wird. Aufgrund einer durchgeführten Laufzeitmessung und Amplitudenwertdetektion kann der Materialungänze 1 U innerhalb des Prüfkörpers P ein bestimmter Amplitudenwert A zugeordnet werden, der in entsprechender Weise abgespeichert wird. Es ist leicht nachvollziehbar, dass auf diese Weise jedem einzelnen Raumpunkt innerhalb des Prüfkörpers P eine entsprechende Amplitudeninformation zeitaufgelöst zugeordnet werden kann. Gilt es ein bestimmtes Sektorbild, B-Bild zu ermitteln, so bedarf es lediglich der Auswahl einzelner abgespeicherter Voxelwerte, deren Zusammensetzung ein zweidimensionales Schnittbild durch den Prüfkörper ergeben.

Ist es hingegen erwünscht ein konventionelles A-Bild zu erzeugen, um bspw. das Ultraschallsignal unter einen bestimmten Einschallwinkel in den Prüfkörper P darzustellen, so kann ein derartiges eindimensionales Schnittbild ebenfalls aus den gespeicherten Informationen rekonstruiert werden. Gemäß der schematisierten Darstellung in Figur 6 zur Rekonstruktion eines A-Bildes liegen im Gegensatz zur Rekonstruktion eines B-Bildes alle rekonstruierten Voxelwerte längs einer geraden Linie L, so dass eine eindimensionale Projektion A-Bildes entsteht.

Somit ist es möglich innerhalb eines einzigen Sendetaktes einen allumfassenden Datensatz zu gewinnen, aus dem sowohl komplette Sektorbilder als auch einzelne A-Bilder für beliebige Einschallwinkel rekonstruiert werden können. Vorraussetzung hierfür ist die Verwendung eines Gruppenstrahlersystems, das nach dem Phased-Array-System aufgebaut ist. Selbstverständlich können in der gleichen Weise auch Volumenbilder durch entsprechende Zusammenschau räumlich verteilter Voxelwerte direkt aus dem abgespeicherten Datensatz generiert werden

Aufgrund einer Laufzeit-bezogenen Rekonstruktion ergeben sich Fokussierungseffekte, wobei der Fokuspunkt in jedem einzelnen Voxel des Sektorbildes bzw. des erzeugten A-Bildes liegt. Eine derartige synthetische Fokussierungstechnik hilft auch die Empfindlichkeit, die laterale Auflösung sowie das Signal-Rausch-Verhältnis für die durchgeführte Ultraschallprüfung erheblich zu verbessern. Sollte man bspw. unter Verwendung konventioneller Gruppenstrahlertechnik eine gleiche Signal- und Bildqualität für die Rekonstruktion bestimmter auf Ultraschallwelleninformationen basierenden Schnittbilder durch einen Prüfkopf erhalten, so muss jedes einzelne Voxel innerhalb des Prüfkörpers in unterschiedlichen Sendetakten abgetastet werden. Ein mess- und auswertetechnisch großer Aufwand, der mit konventioneller Gruppenstrahlertechnik nicht durchgeführt wird.

### Bezugszeichenliste

- 1: Gruppenstrahlerprüfkopf
- 2: Kabel
- 3: Verstärker
- 4: Analog-Digital-Wandler
- 5: Zeitverzögerungsglied
- 6: Digitaler Summierer
- 7: B-Bild Rekonstruktionseinheit
- 8: Ultraschallwandler
- 9: Prüfkörperoberfläche

## Patentansprüche

1. Verfahren zur zerstörungsfreien Untersuchung eines Prüfkörpers (P) mittels Ultraschall, bei dem mit einer Vielzahl von Ultraschallwandlem (8) Ultraschallwellen in den Prüfkörper (P) eingekoppelt und innerhalb des Prüfkörpers reflektierte Ultraschallwellen von einer Vielzahl von Ultraschallwandlem (8) empfangen und in Ultraschallsignale umgewandelt werden, die der zerstörungsfreien Untersuchung zugrunde gelegt werden,
**gekennzeichnet durch** folgende Verfahrensschritte:
- Vorsehen einer Vielzahl n von arrayförmig verteilt angeordneten Ultraschallwandlem (8) an einer Oberfläche (9) des Prüfkörpers (P), derart, dass jeder einzelne Ultraschallwandler (8) in alle Raumrichtungen innerhalb des Prüfkörpers Ultraschallwellen einzuschallen vermag, und Aktivieren wenigstens einer Gruppe von i der n Ultraschallwandler (8) derart, dass sich die i in den Prüfkörper eingekoppelten Ultraschallwellenfronten zu einer sich innerhalb des Prüfkörpers kugelförmig ausbreitenden Gesamtwellenfront (W) überlagem,
- Empfangen der innerhalb des Prüfkörpers (P) reflektierten Ultraschallwellen mit einer Vielzahl m von an der Oberfläche (9) vorgesehenen Ultraschallwandler (8) und Generieren von m Ultraschallzeitsignalen, in denen zeitaufgelöst Amptitudeninformationen derart enthalten sind, dass die von den einzelnen Ultraschallwandlem (8) empfangenen Ultraschallzeitsignale unter Berücksichtigung jeweils einer Laufzeit zwischen dem Aussendezeitpunkt und dem Empfangszeitpunkt an jedem der einzelnen Ultraschallwandler (8) derart erfasst werden, dass das Volumen des Prüfkörpers (P) in einzelne Raumpunkte, in so genannte Voxel unterteilt wird, zu denen jeweils wenigstens ein Teil des Ultraschallechosignals zugeordnet wird, das einem so genannten Voxelwert entspricht.
- Abspeichem der m Ultraschallzeitsignale,
- Rekonstruieren eines 3-dimensionalen Volumenbildes, eines Sektorbildes in Form eines 2-dimensionalen Ultraschallschnittbildes **durch** den Prüfkörper (P) oder eines A-Bildes in Form eines 1-dimensionalen, längs eines vorgebbaren Einschallwinkels zeit- und ortsaufgelösten Ultraschallechosignals, ausschließlich unter Verwendung wenigstens eines Teils der m Ultraschallzeitsignale derart, dass in einem Volumenbereich, in der Schnittebene oder längs des Einschallswinkels liegende Voxelwerte ausgewählt werden.

2. Verfahren nach Anspruch 1,
**dadurch gekennzeichnet, dass** 3 ≤ i ≤ n ist.

3. Verfahren nach Anspruch 1 oder 2,
**dadurch gekennzeichnet, dass** das Empfangen der innerhalb des Prüfkörpers reflektierten Ultraschallwellen unter Zugrundelegung der Sampling Phased Array Technik durchgeführt wird.

4. Verfahren nach einem der Ansprüche 1 bis 3,
**dadurch gekennzeichnet, dass** der wenigstens eine Ultraschallwandler in einem einzigen Sendetakt zur Aussendung von Ultraschallwellen pulsartig aktiviert wird.

## Claims

1. A method for the non-destructive investigation of a test piece (P) by means of ultrasound, in which with a multiplicity of ultrasound transducers (8) ultrasound waves are coupled into the test piece (P), and ultrasound waves reflected within the test piece are received by a multiplicity of ultrasound transducers (8) and converted into ultrasound signals, which form the basis of the non-destructive investigation,
**characterised by** the following steps in the method:
- provision of a multiplicity n of ultrasound transducers (8) arranged in the form of a distributed array on a surface (9) of the test piece (P), such that each individual ultrasound transducer (8) is able to intromit ultrasound waves in all spatial directions within the test piece, and activation of at least one group of i of the n ultrasound transducers (8) such that the i ultrasound wave fronts coupled into the test piece superimpose into one overall wavefront (W) propagating in a spherical manner within the test piece,
- reception of the ultrasound waves reflected within the test piece (P) with a multiplicity m of ultrasound transducers (8) provided on the surface (9), and generation of m ultrasound time signals, in which time-resolved amplitude information is held such that that the ultrasound time signals received by the individual ultrasound transducers (8), taking account in each case of an elapsed time between the transmission time and the reception time at each of the individual ultrasound transducers (8), are registered such that the volume of the test piece (P) is divided into individual spatial points, so-called voxels, to which in each case at least one part of the ultrasound echo signal is assigned, which corresponds to a so-called voxel value,
- storage of the m ultrasound time signals,
- reconstruction of a 3-dimensional volumetric image, of a sector image in the form of a 2- dimensional ultrasound sectional image through the test piece (P), or of an A-image in the form of a 1-dimensional ultrasound echo signal, time- and space-resolved along a prescribable intromission angle, exclusively with the use of at least one part of the m ultrasound time signals such that voxel values are selected in a volume region, in the sectional plane, or lying along the intromission angle.

2. The method in accordance with Claim 1,
**characterised in that** 3 ≤ i ≤ n.

3. The method in accordance with Claim 1 or 2,
**characterised in that** the reception of the ultrasound waves reflected within the test piece is carried out on the basis of sampling phased array technology.

4. The method in accordance with one of the Claims 1 to 3,
**characterised in that** the at least one ultrasound transducer is activated in a pulsed manner in a single transmission clock pulse for purposes of transmitting ultrasound waves.

## Revendications

1. Procédé pour l'examen sans destruction d'une éprouvette (P) au moyen d'ultrasons, dans lequel des ondes ultrasonores sont injectées dans l'éprouvette (P) avec une pluralité de transducteurs d'ultrasons (8) et des ondes ultrasonores réfléchies à l'intérieur de l'éprouvette sont réceptionnées d'une pluralité de transducteurs d'ultrasons (8) et converties en signaux ultrasonores, qui sont pris pour base de l'examen sans destruction,
**caractérisé par** les étapes de procédé suivantes :
- prévision d'une pluralité n de transducteurs d'ultrasons (8) disposés avec une répartition de manière à former un réseau sur une surface (9) de l'éprouvette (P), de telle sorte que chaque transducteur d'ultrasons (8) individuel est en mesure d'enclencher des ondes ultrasonores dans toutes les directions de l'espace à l'intérieur de l'éprouvette, et activation d'au moins un groupe de i des n transducteurs d'ultrasons (8), de telle sorte que les i fronts d'ondes ultrasonores injectés dans l'éprouvette se superposent pour former un front d'onde global (W) se propageant en forme de sphère à l'intérieur de l'éprouvette,
- réception des ondes ultrasonores réfléchies à l'intérieur de l'éprouvette (P) avec une pluralité m de transducteurs d'ultrasons (8) prévus sur la surface (9) et génération de m signaux de temps d'ultrasons, dans lesquels sont incluses des informations d'amplitude avec une résolution dans le temps, de telle sorte que les signaux de temps d'ultrasons reçus des transducteurs d'ultrasons (8) individuels sont enregistrés sur chacun des transducteurs d'ultrasons (8) individuels compte tenu de respectivement un temps de propagation entre le moment d'émission et le moment de réception, de telle sorte que le volume de l'éprouvette (P) est subdivisé en points d'espace individuels, en "voxels", à chacun desquels au moins une partie du signal d'écho ultrasonore est attribuée, lequel signal correspond à une valeur voxel,
- stockage des m signaux de temps d'ultrason,
- reconstitution d'une image de volume en 3 dimensions, d'une image de secteur sous la forme d'une image de coupe d'ultrason en 2 dimensions dans l'éprouvette (P) ou d'une image A sous la forme d'un signal d'écho ultrasonore à 1 dimension, résolu dans le temps et localement le long d'un angle d'irradiation acoustique pouvant être prédéfini, uniquement avec l'utilisation d'au moins une partie des m signaux de temps d'ultrason, de telle sorte que des valeurs voxels situées dans une zone de volume, dans le plan de coupe ou le long de l'angle d'irradiation acoustique sont sélectionnées.

2. Procédé selon la revendication 1,
**caractérisé en ce qu'**on a 3 ≤ i ≤ n.

3. Procédé selon la revendication 1 ou 2,
**caractérisé en ce que** la réception des ondes ultrasonores réfléchies à l'intérieur de l'éprouvette est effectuée en se basant sur la technique Sampling Phased Array.

4. Procédé selon l'une quelconque des revendications 1 à 3,
**caractérisé en ce que** le au moins un transducteur d'ultrasons est activé par impulsions dans un unique cycle d'émission pour l'envoi d'ondes ultrasonores.
